# EUROPEAN PATENT SPECIFICATION

(11) **EP 4 565 486 B1**
(45) Date of publication and mention of the grant of the patent: **17.12.2025**
(21) Application number: 23739686.6
(22) Date of filing: 30.06.2023
(51) Int. Cl.: B64D 33/08, B64D 27/24, B64D 13/00, B64C 29/00, B64C 27/28, B64D 13/06

(54) **AIRCRAFT CAPABLE OF HOVERING AND RELATIVE CONTROL METHOD**
SCHWEBEFÄHIGES FLUGZEUG UND VERFAHREN ZUR RELATIVEN STEUERUNG
AÉRONEF CAPABLE DE FAIRE DU VOL STATIONNAIRE ET MÉTHODE DE CONTRÔLE RELATIVE

(30) Priority: 05.08.2022 EP 22188969
(43) Date of publication of application: 11.06.2025
(73) Proprietor: Leonardo S.p.A., 00195 Roma (IT)
(72) Inventor: MARZI, Tommaso, 21017 Samarate (VA) (IT); SAMPUGNARO, Luca, 21017 SAMARATE (VA) (IT); PIRRELLO, Riccardo, 21017 SAMARATE (VA) (IT)
(74) Representative: Studio Torta S.p.A.
(86) International application number: PCT/IB2023/056817
(87) International publication number: WO 2024/028671

(56) References cited:
- WO-A1-2021/106549
- WO-A1-2021/222528
- CN-A- 113 193 209
- US-A1- 2007 117 501

## Description

### Cross-Reference to Related Applications

This Patent Application claims priority from European Patent Application No. 22188969.4 filed on August 5, 2022.

### Technical Field

The present invention relates to an aircraft capable of hovering, for example a helicopter or a convertiplane or a heliplane.

The present invention also relates to a method for controlling an aircraft capable of hovering.

### Background

In the aviation sector, aeroplanes are normally used for high cruising speeds, in particular greater than 150 knots (278 km/h) and high altitudes, e.g. above 30,000 feet (9144 meters). At high cruising speeds and altitudes, aeroplanes use fixed wings to generate the lift necessary to sustain the plane itself. A sufficient value of this lift can only be obtained by accelerating the aeroplane on runways of considerable length. These runways are also necessary to allow the same aeroplanes to land.

In contrast, the helicopters normally have lower cruising speeds than those of the aeroplanes and generate the necessary lift for sustenance through the rotation of the blades of the main rotor. As a result, helicopters can land/take off without the need for a horizontal speed and using particularly small surfaces. Moreover, helicopters are able to hover and to fly at relatively low altitudes and speeds, resulting thus as particularly manoeuvrable and suitable for demanding manoeuvres such as rescuing people in the mountains or at sea.

Nevertheless, helicopters have inherent limitations in terms of maximum operating altitude, which is around 20000 feet (6096 meters), and of maximum operating speed, which cannot exceed 150 knots (278 km/h).

In order to meet the demand for aircrafts capable of presenting the same manoeuvrability and comfort of use as the helicopter and at the same time overcoming the inherent limitations mentioned above, convertiplanes and heliplanes are known.

An example of a convertiplane is described in patent application US-B-10,011,349.

In greater detail, the convertiplane described in the aforesaid application essentially comprises:
- a fuselage extending along a first longitudinal axis; and
- a wing protruding cantilevered and formed by a pair of half-wings arranged on respective mutually opposite parts of the fuselage, and having respective free ends opposite to the fuselage and aligned along a second transverse axis that is substantially orthogonal to the first longitudinal axis.

The convertiplane further comprises:
- a pair of nacelles housing the respective motors; and
- a pair of rotors that are rotatable around respective third axes and operatively connected to respective motors.

The rotors are tiltable with respect to the wing around a fourth axis, preferably parallel to the second axis.

The convertiplanes are also able to selectively assume:
- a first "aeroplane" configuration, in which the rotors are arranged with respective third axes that are substantially parallel to the first axis of the same convertiplane and coaxial to the respective engines; or
- a second "helicopter" configuration, in which the rotors are arranged with the respective third axes that are substantially vertical and orthogonal to the first axis of the convertiplane and orthogonal to the respective motors.

Thanks to the possibility of tilting the rotors, the convertiplanes are able to take off and land like a helicopter, i.e. in a direction substantially perpendicular to the first longitudinal axis of the convertiplane, without the need for a runway.

Furthermore, the convertiplanes are able to take off and land on rough terrains and without generating a noise level incompatible with an urban settlement.

In addition, the convertiplanes are capable of hovering when arranged in the helicopter configuration.

Furthermore, the convertiplanes can reach and maintain cruising speeds of approximately 250-300 knots (463-556km/h) and flight altitudes of the order of 30000 feet (9144 meters) when arranged in the airplane configuration.

This cruising speed is well above the value of about 150 knots (278 km/h) that defines the maximum cruising speed of the helicopters.

Similarly, the above altitude is well above the one typical of the helicopters and allows convertiplanes arranged in an airplane configuration to avoid the clouds and atmospheric disturbances characteristic of lower altitudes.

The heliplanes, such as, for example, the EUROCOPTER X-3 aircraft comprise, in addition to the components commonly found in a known helicopter such as a main rotor with vertical axis, a pair of half-wings protruding cantilevered from respective parts of the fuselage of the heliplane along a fourth transverse axis substantially orthogonal to a fifth longitudinal axis of the aircraft and to the axis of rotation of the main rotor.

In more detail, each of the half-wings carries a respective propeller which comprises, in a known manner, a drive shaft operable by a relative motor and a plurality of blades articulated on the drive shaft itself.

In particular, each drive shaft is rotatable around a relative sixth axis substantially parallel to the longitudinal axis of the heliplane, i.e., a horizontal axis.

The heliplane is therefore able, in the same way as the convertiplane, to take off and land in a vertical direction by means of the main rotor and to fly in forward flight by means of the propellers and the aforesaid half-wings.

During the forward flight, the main rotor rotates idly while the thrust is generated by the propellers.

Electrically-propelled or hybrid-propelled aircrafts are known wherein at least one propulsion element (e.g. a propeller or rotor) is operable by battery-powered electric motors.

In such aircrafts, the temperature of the batteries must be strictly maintained within a temperature range. In fact, an uncontrolled increase in the temperature of the batteries could lead to a condition known as *"thermal runaway",* in which flames are formed or explosions are triggered, and which can have disastrous consequences for the entire aircraft.

In the field of the electrically- or hybrid-propelled aeroplanes, a number of battery cooling solutions have been developed, including those shown in US-B-10,177,424, WO-A-2021/064374, EP-B-3176851, US 9,415,878 and US 3,957,230.

According to these solutions, a battery of the aeroplane is arranged inside a cooling duct obtained in the fuselage or at a wing and is impinged by an air flow due to the motion of the aircraft itself.

However, such solutions developed specifically for aeroplanes do not make it possible to effectively regulate the temperature of the batteries of the aircraft capable of hovering.

WO-A1-2021222528 discloses an aircraft nacelle having a first and second heat exchanger section to cool aircraft during different modes. Additionally, a fan and other components are configured to maximize efficiency and cooling capacity during a plurality of operating conditions.

CN-A-113193209 discloses a fixed-wing unmanned aerial vehicle air cooling type fuel cell double-stack integrated power system. The system comprises a fuselage, a power motor, a high-pressure hydrogen storage tank, wings, two air cooling type fuel cell stacks symmetrically arranged in the middle of the fuselage or on the wings, and two heat dissipation systems corresponding to the air cooling type fuel cell stacks; an air flow channel of the electric pile is a parallel wave-shaped flow channel; when the galvanic pile is arranged in the middle of the machine body, the cooling system further comprises a cooling fan; when the galvanic pile is arranged on the wings, the power system is suitable for the unmanned aerial vehicle with auxiliary propellers on the wings, and the heat dissipation system further comprises a wing front air guide cover; when the unmanned aerial vehicle is started or flies at a low speed, a medium speed and a high speed, the reaction temperature of the galvanic pile is controlled to be in an ideal temperature interval through different heat dissipation modes.

WO-A1-2021106549 discloses a multi-rotor helicopter having a fuselage and a plurality of fan units. Each of the fan units is equipped with a circular fan frame, a rotating blade, and a drive-system cooling unit. Each drive-system cooling unit has: an accommodation container that accommodates at least one of a drive unit, a driver, and a power source; a cooling fan that supplies cooling air to the accommodation container; an intake flow path that guides air from the cooling fan toward the accommodation container; and an exhaust flow path that discharges air that has passed through the accommodation container. The discharge flow path discharges air that has passed through the accommodation container in the tangent direction of the fan frame.

In aircrafts capable of hovering, in fact, the risk that the temperature of the batteries increases in an uncontrolled way is particularly high, especially while hovering. Specifically, in this flying condition, the air flow rate that invests the aircraft and that would be destined for heat exchange with the batteries is much lower than during the forward flight.

There is a perceived need in the industry to realize an aircraft capable of hovering, wherein the temperature of the batteries can be regulated efficiently.

Aim of the present invention is to realize an aircraft capable of hovering, which allows to meet the need specified above in a simple and economical way.

### Summary

According to the invention, this aim is achieved by an aircraft capable of hovering as claimed in Claim 1 and by a method for controlling an aircraft capable of hovering as claimed in Claim 11.

### Brief Description of the Drawings

For a better understanding of the present invention, a preferred non-limiting embodiment is described below, purely by way of example and with the aid of the attached drawings, wherein:
- Figure 1A is a side view of an aircraft according to the present invention in a first operating configuration, comprising a cooling system and with parts removed for clarity's sake;
- Figure 1B is a side view of the aircraft shown in Figure 1A in a second operating configuration;
- Figure 2 is a perspective view of the aircraft of Figures 1A and 1B in an enlarged scale and with parts removed for clarity's sake;
- Figure 3 is an exploded view of the cooling system of Figures 1A and 1B with parts removed for clarity's sake;
- Figure 4 is a top view of the cooling system of Figures 1A, 1B and 3 with parts removed for clarity's sake;
- Figure 5 is a detail of Figure 4 on a greatly enlarged scale and with a partial section; and
- Figure 6 is a section along line VI-VI in Figure 1A with parts removed for clarity's sake.

### Description of Embodiments

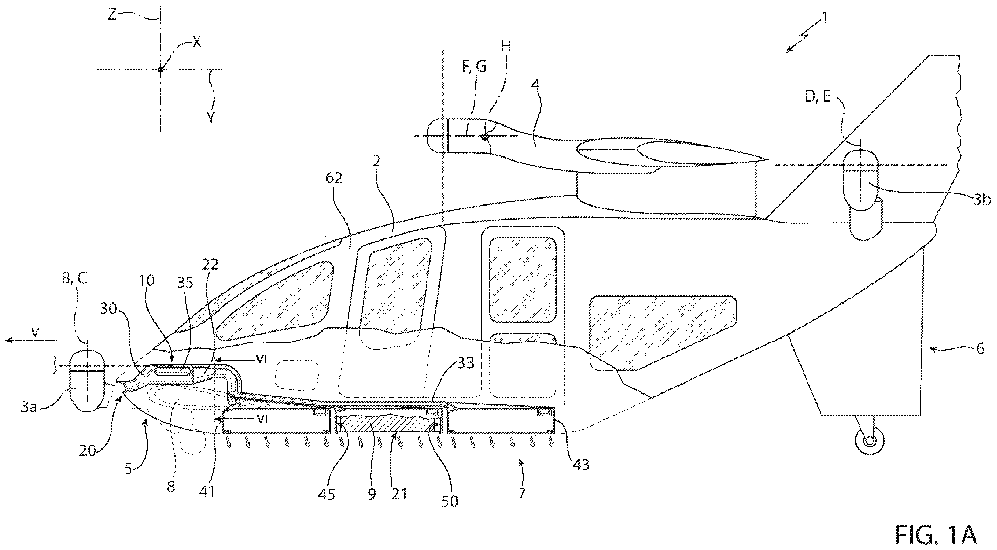

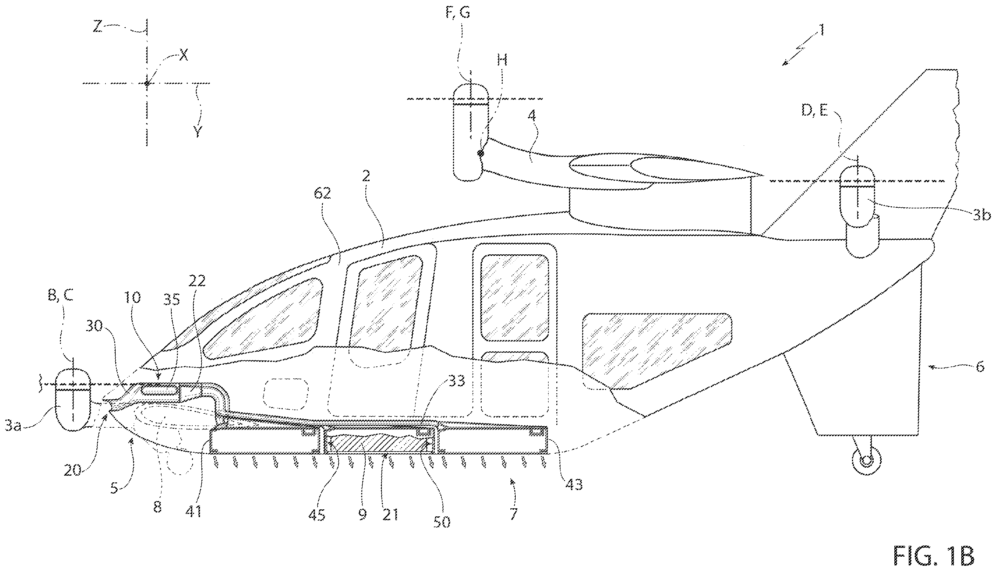

With reference to Figures 1A and 1B, 1 denotes an aircraft capable of hovering with at least partly electric propulsion.

In greater detail, the aircraft 1 is a convertiplane selectively switchable between:
- a first configuration (Figure 1A), in which it is in a forward flight condition and proceeds along a predominantly horizontal trajectory; and
- a second configuration (Figure 1B), in which it performs a hovering manoeuvre or moves forward along a predominantly vertical trajectory.

It must be specified that in the following present disclosure, expressions such as "upper", "lower", "at the front", "at the back" and the like are used with reference to normal forward flight or "hovering" conditions of the aircraft 1.

It is possible to identify a triplet of axes integral to the aircraft 1 and originating at a centre of gravity of the aircraft 1 itself formed by:
- a longitudinal axis Y of the same aircraft 1;
- an axis X orthogonal to the axis Y; and
- an axis Z orthogonal to the axes X, Y.

It is also possible to define a median plane M of the aircraft 1 with respect to the axis X and directed parallel to the axis Y.

The aircraft 1 essentially comprises:
- a fuselage 2 elongated along the longitudinal Y axis;
- a plurality of rotors 3a, 3b, 4 that are rotatable around respective rotation axes B, C, D, E, F, G with respect to the fuselage 2;
- electrical drive means - not shown - adapted to rotate at least one of the rotors 3a, 3b and 4;
- a plurality of batteries 9 adapted to electrically power the electrical drive means; and
- a cooling system 10 of the batteries 9.

In detail, the cooling system 10 is adapted to regulate the temperature T of the batteries 9 by means of the heat exchange between an air flow taken from the outside and the batteries 9.

The aircraft 1 could further comprise one or more thermal motors for driving one or more of the rotors 3a, 3b and 4. In other words, the aircraft 1 could be with hybrid propulsion.

As shown in Figures 1A and 1B, the fuselage 2 defines a nose 5 and a tail 6 of the aircraft 1, which are opposite to each other along the longitudinal axis Y. In addition, the fuselage 2 comprises a belly 7, which is interposed between the nose 5 and the tail 6 along the longitudinal axis Y.

In detail, the belly 7 is adapted to be facing towards the ground during the normal operation of the aircraft 1.

With reference to the normal forward flight operating conditions, the aircraft 1 proceeds in a direction oriented from the tail 6 to the nose 5 with a forward speed v with respect to the ground (Figure 1A).

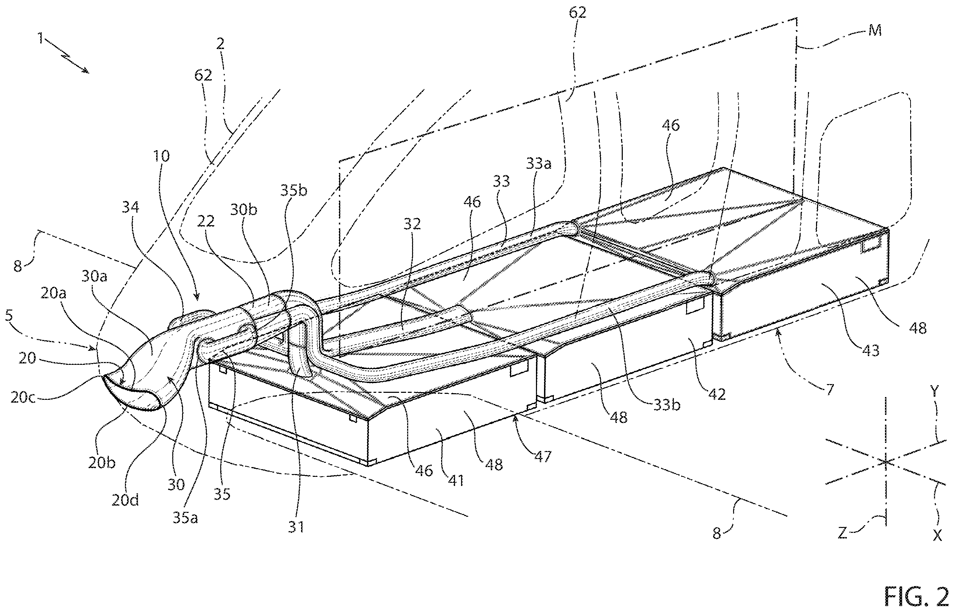

In greater detail, the aircraft 1 comprises:
- a pair of half-wings 8 extending cantilevered from respective mutually opposite sidewalls 62 of the fuselage 2 and transversely to the axis Y (Figure 2);
- a pair of rotors 3a that are rotatable about respective fixed axes B, C with respect to the fuselage 2;
- a pair of rotors 3b that are rotatable about respective fixed axes D, E with respect to the fuselage 2; and
- a pair of rotors 4 that are rotatable about respective axes F, G and tiltable with respect to an axis H between a first position assumed when the aircraft 1 is in the first configuration and a second position assumed when the aircraft 1 is in the second configuration.

In detail, the axis H is parallel to the axis X.

The axes B, C and the axes D, E lie on two respective planes parallel to the axes X and Z.

In addition, the axes B and C are incident with each other and are tilted with respect to the axis Z, in particular at a point arranged above the belly 7. In greater detail, the axes B and C are both tilted by 10° with respect to the axis Z.

Similarly to the axes B and C, the axes D and E are incident with each other and tilted with respect to the axis Z, in particular at a point arranged above the belly 7. In greater detail, the axes D and E are both tilted by 10° with respect to the axis Z.

The rotors of each pair of rotors 3a and 3b are arranged symmetrically with respect to the median plane M. In addition, the pair of rotors 3a is arranged at the nose 5, the pair of rotors 3b is arranged at the tail 6, and the pair of rotors 4 is interposed between the pair of rotors 3a and the pair of rotors 3b along the longitudinal axis Y.

The axes F, G are arranged orthogonally to the axes B, C; D, E and parallel to the axis Y when the rotors 4 are arranged in the first position.

The axes F and G are arranged parallel to the axis Z when the rotors 4 are arranged in the second position (Figure 1B) .

Preferably, the rotors 3a, 3b and 4 are with fixed pitch.

In the embodiment shown, each of the rotors 3a, 3b and 4 is driven by a respective electric motor of the electric drive means. In detail, each electric motor is operable independently of the other electric motors.

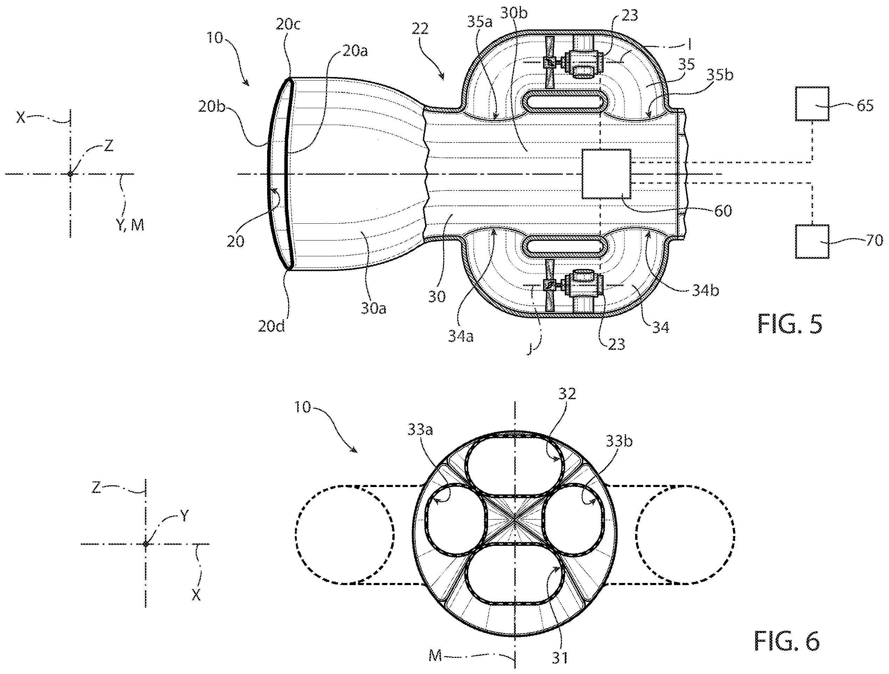

The aircraft 1 further comprises a control unit 60 (only schematically shown in Figure 5) receiving as input a plurality of control signals provided by the crew, by an autopilot or a remote control system, and programmed to provide as output a plurality of commands to command the rotors 3a, 3b and 4 so that they provide desired values of the relative thrusts. In greater detail, the control unit 60 is programmed to command the rotors 3a, 3b and 4 to generate respective thrusts independent of each other.

Referring to Figure 2, the cooling system 10 comprises:
- an opening 20 for the air to enter;
- a plurality of openings 21 for the air to escape; and
- a passage 22, which extends through the fuselage 2 and fluidly connects the opening 20 with the openings 21.

In particular, the batteries 9 are placed within the passage 22 and are fluidically interposed between the opening 20 and at least part of the openings 21.

Advantageously, the cooling system 10 comprises two fans 23 adapted to increase the kinetic energy of the air contained in the passage 22 (Figure 5); these fans 23 are adapted to be operated when the forward speed v of the aircraft 1 with respect to the ground is lower than a speed threshold value v0 and/or when the temperature T of the batteries 9 exceeds a temperature threshold value T0.

For example, the temperature threshold value T0 is lower than 75°C. Preferably, the temperature threshold value T0 is equal to 60°C.

The control unit 60 is also operatively connected to the fans 23 to control their operation, i.e. to command the rotation of the fans 23 around respective rotation axes I, J (Figure 5).

In detail, when the forward speed v is greater than the speed threshold value v0 (e.g., during the forward flight) and/or the temperature T of the batteries is lower than the temperature threshold value T0, the control unit 60 is adapted to deactivate or keep the fans 23 deactivated. In this condition, the batteries 9 are cooled by the flow of air entering in the cooling system 10 through the opening 20 due to the effect of the relative motion of the aircraft 1 with respect to the air in which it is immersed. This type of cooling is called *"ram ventilation".*

Conversely, when the forward speed v is lower than the speed threshold value v0 (e.g., while hovering) and/or the temperature T of the batteries is greater than the temperature threshold value T0, the control unit 60 is adapted to activate the fans 23. In this condition, the batteries 9 are cooled by the flow of air entering the cooling system 10 through the opening 20, which is forced by the action of the fans 23.

As shown in Figures 1A and 1B, the opening 20 is arranged at the nose 5 and the openings 21 are arranged at the belly 7.

In detail, the opening 20 is centred with respect to the median plane M (Figure 2).

Preferably, furthermore, the opening 20 comprises:
- a curved section 20a having an upwardly facing curvature, i.e. towards a portion of the aircraft 1 opposite to the belly 7 along the axis Z;
- a curved section 20b spaced from the curved section 20a parallel to the axis Z towards the belly 7 and also having an upwardly facing curvature; and
- two curved sections 20c, 20d, in particular in the form of an arc of circumference, which connect the curved sections 20a, 20b at their respective opposite ends parallel to the axis X.

In other words, the opening 20 has a curved elliptical shape, i.e. a bean shape.

The aircraft 1 further comprises three containers 41, 42, 43 defining respective inner volumes 50, within which respective pluralities of batteries 9 are contained. The batteries 9 within each inner volume 50 define a plurality of interstices 45 with one another and the respective container 41, 42, 43.

In the embodiment shown, the containers 41, 42 and 43 are parallelepiped-shaped (Figure 2). In detail, the containers 41, 42 and 43 have a square or substantially square base in a plane parallel to the axes X and Y. In addition, the extension of the containers 41, 42, and 43 parallel to the axis Z is smaller (e.g., 1/5 or 1/6) than the extension of the containers 41, 42, and 43 parallel to the axes X and Y.

The containers 41, 42, 43, moreover, are aligned with each other parallel to the axis Y and are centred with respect to the median plane M.

Preferably, the containers 41, 42 and 43 are identical to each other.

The batteries 9 are shaped like an elongated parallelepiped along a direction K. The batteries 9 are furthermore parallel to each other, i.e. arranged so that the relative directions K coincide, and aligned with each other parallel to the axis X. In the embodiment shown, the directions K are parallel to the longitudinal axis Y. In addition, inside each container 41, 42, 43 the batteries 9 are fixed to each other.

In the embodiment shown, each container 41, 42, 43 contains five batteries 9.

In detail, temperature T of the batteries 9 refers to the temperature at the outer surface of the batteries 9, or in the vicinity of the batteries 9, for example within the containers 41, 42, 43.

As shown in Figures 2, 3 and 4, the passage 22 comprises:
- a duct 30, which extends starting from the opening 20;
- three ducts 31, 32, 33, which branch off from the duct 30 and which each fluidically connect the duct 30 to the inner volume 50 of a respective container 41, 42, 43; and
- the interstices 45.

In greater detail, proceeding from the opening 20 along the longitudinal axis Y towards the tail 6, the duct 30 comprises a first section 30a and a second section 30b joined together.

The second section 30b is directed parallel to the longitudinal axis Y and the first section 30a extends obliquely with respect to the second section 30b. In detail, the opening 20 is arranged below the second section 30b with respect to the axis Z.

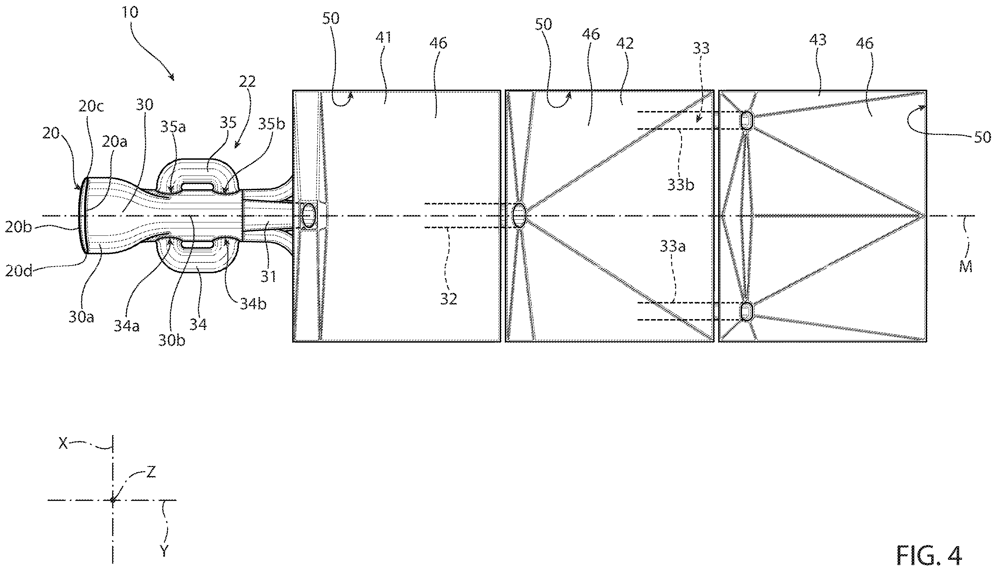

The second section 30b also has a circular cross-section and the first section 30a has a progressively variable shaped section. In detail, the shape of the cross-section of the first section 30a initially corresponds to the shape of the opening 20 and then connects to the circular section of the second section 30b (Figures 4 and 5).

Preferably, moreover, the passage section of the duct 30 has progressively decreasing extension proceeding from the opening 20 along the longitudinal axis Y towards the tail 6.

In greater detail, the duct 31 fluidically connects the second section 30b to the inner volume 50 of the container 41 and is directed substantially parallel to the axis Z. The duct 32 fluidically connects the second section 30b to the inner volume 50 of the container 42. The ducts 31 and 32, moreover, are centred with respect to the median plane M.

The duct 33 fluidically connects the second section 30b to the inner volume 50 of the container 43 and comprises two branches 33a, 33b, which are arranged symmetrically with respect to the median plane M.

The cross-section of the duct 31 has a constant or substantially constant extension parallel to the axis Z. In addition, the ducts 32 and 33 have constant or substantially constant extension along the longitudinal axis Y.

The passage 22 also comprises two auxiliary ducts 34, 35, at which a respective fan 23 is housed (Figure 5).

Each of said auxiliary ducts 34, 35 comprises respective mutually opposite ends 34a, 34b; 35a, 35b. These ends 34a, 34b; 35a, 35b are directly facing the duct 30 and in fluidic communication therewith (Figures 4 and 5).

In greater detail, the auxiliary ducts 34, 35 are directly connected to the second section 30b of the duct 30.

Considering a cross-section of the passage 22 passing through a plane orthogonal to the axis Z, the auxiliary ducts 34 and 35 are U-shaped and are arranged symmetrically with respect to each other with respect to the median plane M (Figure 5).

Each auxiliary duct 34, 35 has a cross-section having an extension lower than the minimum extension of the cross-section of the duct 30. In addition, the sum of the maximum extensions of the cross-sections of the auxiliary ducts 34 and 35 is lower than the minimum extension of the cross-section of the duct 30.

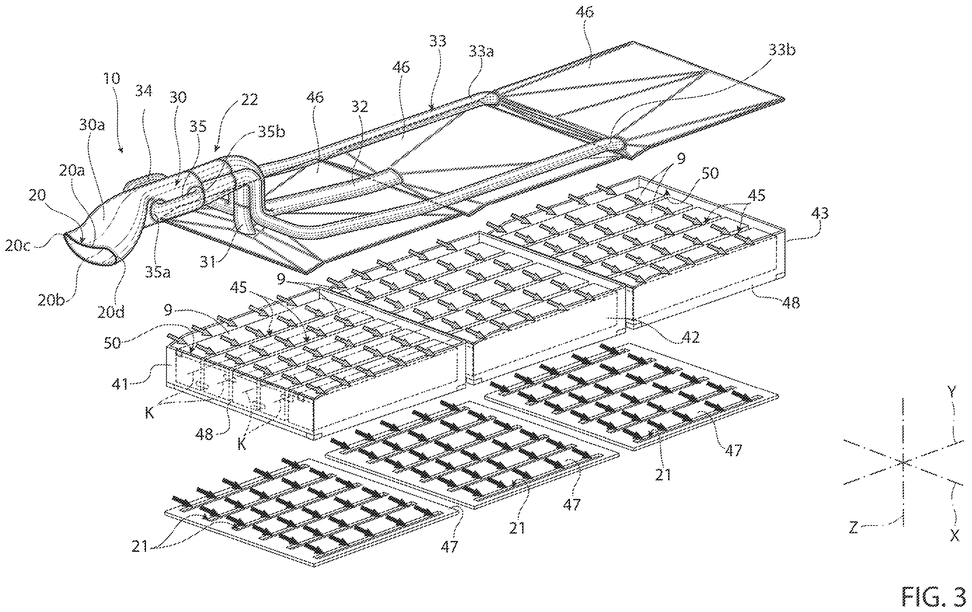

As shown in Figure 3, the openings 21 have a rectangular section in a plane orthogonal to the axis Z, are arranged parallel to each other and to the longitudinal axis Y, and are spaced from each other parallel to the axis X.

In the embodiment shown in Figure 3, the containers 41, 42 and 43 each comprise:
- a cover 46;
- a base plate 47; and
- a set of side walls 48 extending between the cover 46 and the base plate 47 parallel to the axis Z.

The cover 46, the base plate 47 and the set of side walls 48 of each container 41, 42 and 43 define the inner volume 50 of the relative container.

In particular, the openings 21 are obtained at the base plate 47.

Preferably, the covers 46 are fixed to each other and to the ducts 31, 32 and 33 (Figure 3).

The aircraft 1 also comprises (Figure 5):
- sensor means 65 adapted to detect the temperature T of the batteries 9 and operatively connected to the control unit 60;
- sensor means 70 adapted to detect the forward speed v of the aircraft 1 and operatively connected to the control unit 60.

Preferably, the sensor means 70 comprise a flow meter adapted to detect the flow rate that invests, in use, the aircraft 1 in parallel to a horizontal or substantially horizontal forward direction of the aircraft 1.

The cooling system 10 further comprises means for varying the flow rate of air entering through the opening 20, not shown.

Such flow rate variation means comprise, for example, a valve adapted to partialise the flow rate of entering air and operatively connected to the control unit 60.

In detail, the control unit 60 is programmed to command the partialisation of the flow rate of air entering through the valve when the temperature T of the batteries 9 is lower than a minimum temperature threshold value Tmin, which is lower than the temperature threshold value T0. For example, the minimum temperature threshold value Tmin is equal to 0°C.

The operation of the aircraft 1 according to the invention is described below.

In use, the aircraft 1 lands and takes off arranged in the second configuration with the rotors 4 arranged in the second position (Figure 1B). In this second configuration, the lift required to sustain the aircraft 1 is provided by the rotors 3a, 3b and 4.

During the transition from the first to the second configuration of the aircraft, the control unit 60 is programmed to reduce the thrusts generated by the rotors 3a and 3b as the axes F, G of the rotors 4 progressively approach a condition of parallelism with the axis Y and the speed v of the aircraft 1 increases.

The aircraft 1 moves forward at cruising speed in the first configuration with the rotors 4 arranged in the first position (Figure 1A). In this first configuration, the lift required to sustain the aircraft 1 is provided for the most part at least by the half-wings 8 and/or by other aerodynamic surfaces arranged along the aircraft 1. The rotors 3a and 3b can be deactivated if necessary.

During use, the sensor means 65 detect the temperature T of the batteries 9 and/or the sensor means 70 detect the forward speed v.

If the forward speed v is greater than the speed threshold value v0 and/or the temperature T is less than the temperature threshold value T0, the control unit 60 deactivates the fans 23 or keeps them deactivated.

In detail, when the fans 23 are deactivated, the air enters the cooling system 10 through the opening 20 due to the effect of the motion of the aircraft 1, crosses the duct 30 and is distributed among the ducts 31, 32 and 33 reaching the containers 41, 42 and 43. Within the inner volumes 50 of the containers 41, 42 and 43, the air flows in the interstices 45, absorbing the heat of the batteries 9, and then escapes from the openings 21.

In greater detail, during the crossing of the passage 22, the air flow transits largely through the second section 30b and minimally through the auxiliary ducts 34 and 35, by virtue of the cross-sectional dimensions of these auxiliary ducts 34, 35 with respect to the cross-sectional dimensions of the second section 30b.

Conversely, if the forward speed v is lower than the speed threshold value v0 (e.g. when aircraft 1 is hovering), or the temperature T exceeds the temperature threshold value T0, the control unit 60 activates the fans 23.

In detail, when the fans 23 are active, the air passes through in order the same ducts it passes through when the fans 23 are deactivated. However, since the fans 23 are activated, the kinetic energy of the air is increased and the forced ventilation of the batteries 9 is achieved.

If during operation of the aircraft 1 the temperature T of the batteries 9 falls below the minimum temperature threshold value Tmin, the control unit 60 commands the partialisation of the entering air flow rate. In this way, the amount of heat removed from the batteries 9 is reduced.

An examination of the characteristics of the aircraft 1 shows the advantages that it allows obtaining.

Since the cooling system 10 comprises the fans 23, which perform the forced ventilation when the forward speed v is lower than the speed threshold value v0 and/or when the temperature T exceeds the temperature threshold value T0, it is possible to effectively regulate the temperature of the batteries 9 of the aircraft 1. This is particularly true when the aircraft 1 is hovering and the flow rate of air entering through the opening 20 is therefore limited or in any case characterized by low kinetic energy.

Since the opening 20 is arranged at the nose 5, it is possible to maximize the flow rate of air entering through the opening 20 itself. At the same time, since the openings 21 are arranged at the belly 7, the flow of air exiting the cooling system 10 does not disturb the aerodynamics of the aircraft 1.

Since the fans 23 are respectively arranged in the auxiliary ducts 34, 35, the fans 23 when they are deactivated do not constitute an obstacle to the transit of air, which passes substantially undisturbed through the duct 30.

It is clear that the aircraft 1 described and shown herein may be subject to modifications and variations without thereby departing from the scope of protection defined by the Claims.

The aircraft 1 could be a helicopter or a helicoplane.

At least some or all of the rotors 3a, 3b and 4 could be with variable pitch.

The passage 22 could comprise a single auxiliary duct 34, 35, or more than two auxiliary ducts 34, 35.

The cooling system 10 could comprise a single fan 23, or more than one fan 23. In particular, the cooling system 10 could comprise more than one fan 23 for each of the auxiliary ducts 34, 35.

The aircraft 1 could comprise one, or two containers 41, 42, 43, or even more than three containers 41, 42, 43. In addition, the containers 41, 42, 43 could not be aligned with each other.

The passage 22 could comprise a single duct 30 fluidly connecting opening 20 to a single container 41, 42 or 43. Preferably, single duct 30 directly fluidly connects opening 20 to the single container 41, 42, 43. In other words, passage 22 could not comprise ducts 31, 32, 33. According to this embodiment, the one or more auxiliary ducts 34, 35 comprise respective first and second ends 34a, 35a, 34b, 35b both directly facing single duct 30.

The directions K of the batteries 9 could be arranged parallel to the axis X and the batteries 9 could be aligned with each other along the longitudinal axis Y. Additionally or alternatively, the openings 21 could be arranged parallel to each other and to the axis X and be spaced apart from each other parallel to the longitudinal axis Y.

The sensor means 65, 70 could be connected directly to the avionic devices on board the aircraft 1 or could be connected to control units other than the control unit 60.

## Claims

1. Aircraft (1) capable of hovering comprising:
- a fuselage (2) elongated along a longitudinal axis (Y);
- at least one rotor (3a, 3b, 4) that is rotatable about an axis of rotation with respect to said fuselage (2);
- electrical drive means adapted to rotate said at least one rotor (3a, 3b, 4);
- batteries (9) adapted to power said electrical drive means; and
- a cooling system (10) of said batteries (9);
said cooling system (10) comprising:
- a first opening (20) adapted to allow air to enter;
- a plurality of second openings (21) adapted to allow air to escape;
- a passage (22), which fluidly connects said first opening (20) with at least some of said second openings (21) ;
said batteries (9) being placed within said passage (22) and fluidically interposed between said first opening (20) and at least some of said second openings (21);
said cooling system (10) further comprising at least one fan (23) adapted to increase the kinetic energy of the air contained in said passage (22);
said fan (23) being operated, in use, when the forward speed (v) of said aircraft (1) with respect to the ground is lower than a speed threshold value (v0) and/or when the temperature (T) of said batteries (9) exceeds a temperature threshold value (T0);
wherein it comprises at least one container (41, 42, 43) defining an inner volume (50), inside which a plurality of said batteries (9) is contained; said batteries (9) inside said inner volume (50) defining a plurality of interstices (45) between one another and said container (41, 42, 43);
**characterized in that** said passage (22) comprises at least one duct (30), which fluidly connects said first opening (20) to said at least one container (41, 42, 43);
said passage (22) further comprising at least one auxiliary duct (34, 35);
each said auxiliary duct (34, 35) comprising a first end (34a, 35a) and a second end (34b, 35b) that are opposite to each other;
said first and second end (34a, 35a; 34b, 35b) being both directly facing said duct (30);
each said fan (23) being arranged at a respective auxiliary duct (34, 35).

2. Aircraft according to Claim 1, wherein it comprises two said auxiliary ducts (34, 35) arranged symmetrically with respect to each other with respect to a median plane (M) of said aircraft (1) parallel to said longitudinal axis (Y).

3. Aircraft according to Claim 1 or 2, wherein it comprises:
- a control unit (60) operatively connected to said at least one fan (23);
- first sensor means (65) adapted to detect the temperature of said batteries (9) and operatively connected to said control unit (60); and/or
- second sensor means (70) adapted to detect the forward speed (v) of said aircraft (1) and operatively connected to said control unit (60).

4. Aircraft according to Claim 3, wherein said second sensor means (70) comprise a flow meter.

5. Aircraft according to Claim 3 or 4, wherein it comprises means for varying the flow rate of air entering through said first opening (20) operatively connected to said control unit (60);
said control unit (60) being programmed to command said flow rate variation means to partialise said flow rate when, in use, the temperature (T) of said batteries (9) is lower than a minimum temperature threshold value (Tmin);
said minimum temperature threshold value (Tmin) being lower than said temperature threshold value (T0).

6. Aircraft according to any one of the preceding Claims, wherein it is a convertiplane comprising:
- said fuselage (2);
- a pair of half-wings (8) arranged on respective mutually opposite parts of said fuselage (2), and having respective free ends opposite to said fuselage (2) and aligned along a first axis transverse to said longitudinal axis (Y); and
- at least a first pair of said rotors (4) that are rotatable around respective second axes (F, G) and tiltable with respect to said half-wings (8) around a third axis (H) transverse to said longitudinal axis (Y).

7. Aircraft according to Claim 6, wherein it further comprises:
- a second pair of said rotors (3a) that are rotatable around respective fourth axes (B, C) fixed with respect to said fuselage (2); and
- a third pair of said rotors (3b) that are rotatable around respective fifth axes (D, E) fixed with respect to said fuselage (2);
said first pair of rotors (4) being interposed along said longitudinal axis (Y) between said second pair of rotors (3a) and said third pair of rotors (3b);
each rotor of said first, second or third pairs of rotors (4, 3a, 3b) being operable independently of the other rotors of said first, second or third pairs of rotors (4, 3a, 3b).

8. Aircraft according to any one of the preceding Claims, wherein said fuselage (2) defines:
- a nose (5) of said aircraft (1);
- a tail (6) of said aircraft (1) opposite to said nose (5) along said longitudinal axis (Y); and
- a belly (7) interposed between said nose (5) and said tail (6) along said longitudinal axis (Y);
said first opening (20) being arranged at said nose (5) and said second openings (21) being arranged at said belly (7).

9. Aircraft according to Claim 8, wherein said duct (30) comprises a first section (30a) and a second section (30b);
said first section (30a) fluidically connecting said first opening (20) to said second section (30b);
said first opening (20) being closer to said belly (7) than said second section (30b) along a sixth axis (Z), which is vertical in use, of said aircraft (1) and orthogonal to the longitudinal axis (Y).

10. Aircraft according to any one of the foregoing claims, wherein said duct (30) has a progressively decreasing section proceeding from said first opening (20) along said longitudinal axis (Y).

11. Method for controlling an aircraft (1) capable of hovering; said aircraft comprising:
- a fuselage (2) elongated along a longitudinal axis (Y);
- at least one rotor (3a, 3b, 4) that is rotatable about an axis of rotation with respect to said fuselage (2);
- electrical drive means adapted to rotate said at least one rotor (3a, 3b, 4);
- batteries (9) adapted to power said electrical drive means; and
- a cooling system (10) of said batteries (9);
said cooling system (10) comprising:
- a first opening (20) adapted to allow air to enter;
- a plurality of second openings (21) adapted to allow air to escape;
- a passage (22), which places said first opening (20) in fluidic communication with at least some of said second openings (21);
said batteries (9) being placed within said passage (22) and fluidically interposed between said first opening (20) and at least some of said second openings (21);
said cooling system (10) further comprising at least one fan (23) adapted to increase the kinetic energy of the air contained in said passage (22);
said aircraft (1) further comprising at least one container (41, 42, 43) defining an inner volume (50), inside which a plurality of said batteries (9) is contained; said batteries (9) inside said inner volume (50) defining a plurality of interstices (45) between one another and said container (41, 42, 43);
said passage (22) comprising at least one duct (30), which fluidly connects said first opening (20) to said at least one container (41, 42, 43);
said passage (22) further comprises at least one auxiliary duct (34, 35);
each said auxiliary duct (34, 35) comprising a first end (34a, 35a) and a second end (34b, 35b) that are opposite to each other;
said first and second end (34a, 35a; 34b, 35b) being both directly facing said duct (30);
each said fan (23) being arranged at a respective auxiliary duct (34, 35);
said method being **characterized in that** it comprises the step i) of operating said fan (23) when the forward speed (v) of said aircraft (1) with respect to the ground is lower than a speed threshold value (v0) and/or when the temperature (T) of said batteries (9) exceeds a temperature threshold value (T0).

12. Method according to Claim 11, comprising the further steps of:
ii) detecting the temperature of said batteries (9) by first sensor means (65); said first sensor means (65) being operatively connected to a control unit (60) of said aircraft (1); said control unit (60) being also operatively connected to said at least one fan (23); and/or
iii) detecting the forward speed (v) of said aircraft (1) by second sensor means (70); said second sensor means (70) being operatively connected to said control unit (60).

13. Method according to Claim 12, comprising the further step of iv) commanding flow rate variation means of said aircraft (1) to partialise the flow rate of air entering through said first opening (20) by means of said control unit (60) when the temperature (T) of said batteries (9) is lower than a minimum temperature threshold value (Tmin); said flow rate variation means being operatively connected to said control unit (60); said minimum temperature threshold value (Tmin) being lower than said temperature threshold value (T0).

## Patentansprüche

1. Luftfahrzeug (1), fähig zum Schwebeflug, umfassend:
einen Rumpf (2), der sich entlang einer Längsachse (Y) erstreckt;
mindestens einen Rotor (3a, 3b, 4), der um eine Drehachse in Bezug auf den Rumpf (2) drehbar ist;
elektrische Antriebsmittel, die dazu eingerichtet sind, den mindestens einen Rotor (3a, 3b, 4) anzutreiben;
Batterien (9), die dazu eingerichtet sind, die elektrischen Antriebsmittel zu versorgen; und
ein Kühlsystem (10) der Batterien (9);
wobei das Kühlsystem (10) umfasst:
eine erste Öffnung (20), die dazu eingerichtet ist, ein Einströmen von Luft zu ermöglichen;
eine Mehrzahl zweiter Öffnungen (21), die dazu eingerichtet sind, ein Ausströmen von Luft zu ermöglichen;
einen Durchgang (22), der die erste Öffnung (20) mit zumindest einigen der zweiten Öffnungen (21) fluidverbindend;
wobei die Batterien (9) innerhalb des Durchgangs (22) angeordnet sind und fluidisch zwischen der ersten Öffnung (20) und zumindest einigen der zweiten Öffnungen (21) zwischengeschaltet sind;
wobei das Kühlsystem (10) ferner mindestens einen Lüfter (23) umfasst, der dazu eingerichtet ist, die kinetische Energie der in dem Durchgang (22) enthaltenen Luft zu erhöhen;
wobei der Lüfter (23) im Betrieb dann betrieben wird, wenn die Vorwärtsgeschwindigkeit (v) des Luftfahrzeugs (1) relativ zum Boden kleiner ist als ein Geschwindigkeits-Schwellenwert (v0) und/oder wenn die Temperatur (T) der Batterien (9) einen Temperatur-Schwellenwert (T0) überschreitet;
wobei es mindestens einen Behälter (41, 42, 43) umfasst, der ein Innenvolumen (50) definiert, in dem eine Mehrzahl der Batterien (9) enthalten ist; wobei die Batterien (9) innerhalb des Innenvolumens (50) eine Mehrzahl von Zwischenräumen (45) zwischen einander und dem Behälter (41, 42, 43) definieren;
**dadurch gekennzeichnet, dass** der Durchgang (22) mindestens einen Kanal (30) umfasst, der die erste Öffnung (20) mit dem mindestens einen Behälter (41, 42, 43) fluidverbindet;
wobei der genannte Durchgang (22) ferner mindestens einen Hilfskanal (34, 35) umfasst;
wobei jeder Hilfskanal (34, 35) ein erstes Ende (34a, 35a) und ein zweites Ende (34b, 35b), die einander gegenüberliegenden sind, umfasst;
wobei das erste und zweite Ende (34a, 35a; 34b, 35b) beide unmittelbar dem Kanal (30) zugewandt sind;
wobei jeder Lüfter (23) an einem jeweiligen Hilfskanal (34, 35) angeordnet ist.

2. Luftfahrzeug nach Anspruch 1, wobei es zwei der Hilfskanäle (34, 35) umfasst, die symmetrisch zueinander bezüglich einer Mittelebene (M) des Luftfahrzeugs (1) angeordnet sind, die parallel zur Längsachse (Y) verläuft.

3. Luftfahrzeug nach Anspruch 1 oder 2, wobei es umfasst:
eine Steuereinheit (60), die funktionsmäßig mit dem mindestens einen Lüfter (23) verbunden ist;
erste Sensormittel (65), die dazu eingerichtet sind, die Temperatur der genannten Batterien (9) zu erfassen und funktionsmäßig mit der Steuereinheit (60) verbunden sind; und/oder
zweite Sensormittel (70), die dazu eingerichtet sind, die Vorwärtsgeschwindigkeit (v) des Luftfahrzeugs (1) zu erfassen und funktionsmäßig mit der Steuereinheit (60) verbunden sind.

4. Luftfahrzeug nach Anspruch 3, wobei die zweiten Sensormittel (70) einen Durchflussmesser umfassen.

5. Luftfahrzeug nach Anspruch 3 oder 4, wobei es Mittel zum Variieren der Durchflussrate, der durch die erste Öffnung (20) eintretenden Luft, umfasst, die funktionsmäßig mit der Steuereinheit (60) verbunden sind;
wobei die Steuereinheit (60) programmiert ist, die Mittel zum Variieren der Durchflussrate anzuweisen, die Durchflussrate zu partitionieren, wenn im Betrieb die Temperatur (T) der Batterien (9) unter einen minimale(n) Temperatur-Schwellenwert (Tmin) ist;
wobei der minimale Temperatur-Schwellenwert (Tmin) niedriger ist als der Temperatur-Schwellenwert (T0).

6. Luftfahrzeug nach einem der vorhergehenden Ansprüche, wobei es sich um ein Wandelflugzeug handelt, umfassend:
den Rumpf (2);
ein Paar Halbflügel (8), die an jeweils einander gegenüberliegenden Bereichen des Rumpfs (2) angeordnet sind, und die jeweils freie Enden aufweisen, die dem Rumpf (2) gegenüberliegen, und die entlang einer ersten, zur Längsachse (Y) quer verlaufenden Achse ausgerichtet sind; und
mindestens ein erstes Paar der Rotoren (4), die um jeweilige zweite Achsen (F, G) drehbar und relativ zu den Halbflügeln (8) um eine dritte Achse (H), die zur Längsachse (Y) quer verläuft, neigbar sind.

7. Luftfahrzeug nach Anspruch 6, wobei es ferner umfasst:
ein zweites Paar an Rotoren (3a), die um jeweilige vierte Achsen (B, C) drehbar sind, die bezüglich des Rumpfs (2) festgelegt sind; und
ein drittes Paar an Rotoren (3b), die um jeweilige fünfte Achsen (D, E) drehbar sind, die bezüglich des Rumpfs (2) festgelegt sind;
wobei das erste Paar an Rotoren (4) entlang der Längsachse (Y) zwischen dem zweiten Paar an Rotoren (3a) und dem dritten Paar an Rotoren (3b) angeordnet ist;
wobei jeder Rotor des ersten, zweiten oder dritten Paars an Rotoren (4, 3a, 3b) unabhängig von den anderen Rotoren des ersten, zweiten oder dritten Paars an Rotoren (4, 3a, 3b) betreibbar ist.

8. Luftfahrzeug nach einem der vorhergehenden Ansprüche, wobei der Rumpf (2) definiert:
eine Nase (5) des Luftfahrzeugs (1);
ein Heck (6) des Luftfahrzeugs (1), das entlang der Längsachse (Y) der Nase (5) gegenüberliegt; und
einen Bauch (7), der zwischen der Nase (5) und dem Heck (6) entlang der Längsachse (Y) angeordnet ist;
wobei die erste Öffnung (20) an der Nase (5) angeordnet ist und die zweiten Öffnungen (21) am Bauch (7) angeordnet sind.

9. Luftfahrzeug nach Anspruch 8, wobei der Kanal (30) einen ersten Abschnitt (30a) und einen zweiten Abschnitt (30b) umfasst;
wobei der erste Abschnitt (30a) die erste Öffnung (20) fluidisch mit dem zweiten Abschnitt (30b) verbindet;
wobei die erste Öffnung (20) näher am Bauch (7) liegt als der zweite Abschnitt (30b) entlang einer sechsten Achse (Z) des Luftfahrzeugs (1), die im Betrieb vertikal ist, und orthogonal zur Längsachse (Y) verläuft.

10. Luftfahrzeug nach einem der vorhergehenden Ansprüche, wobei der Kanal (30) einen sich fortschreitend verringernden Querschnitt aufweist, ausgehend von der ersten Öffnung (20) entlang der Längsachse (1).

11. Verfahren zum Steuern eines zum Schwebeflug fähigen Luftfahrzeugs (1); wobei das Luftfahrzeug umfasst:
einen Rumpf (2), der sich entlang einer Längsachse (Y) erstreckt;
mindestens einen Rotor (3a, 3b, 4), der um eine Drehachse in Bezug auf den Rumpf (2) drehbar ist;
elektrische Antriebsmittel, die dazu eingerichtet sind, den mindestens einen Rotor (3a, 3b, 4) anzutreiben;
Batterien (9), die dazu eingerichtet sind, die elektrischen Antriebsmittel zu versorgen; und
ein Kühlsystem (10) der Batterien (9);
wobei das Kühlsystem (10) umfasst:
eine erste Öffnung (20), die dazu eingerichtet ist, ein Einströmen von Luft zu ermöglichen;
eine Mehrzahl zweiter Öffnungen (21), die dazu eingerichtet sind, ein Ausströmen von Luft zu ermöglichen;
einen Durchgang (22), der die erste Öffnung (20) mit zumindest einigen der zweiten Öffnungen (21) fluidverbindet;
wobei die Batterien (9) innerhalb des Durchgangs (22) angeordnet sind und fluidisch zwischen der ersten Öffnung (20) und zumindest einigen der zweiten Öffnungen (21) zwischengeschaltet sind;
wobei das Kühlsystem (10) ferner mindestens einen Lüfter (23) umfasst, der dazu eingerichtet ist, die kinetische Energie der in dem Durchgang (22) enthaltenen Luft zu erhöhen;
wobei das Luftfahrzeug (1) ferner mindestens einen Behälter (41, 42, 43) umfasst, der ein Innenvolumen (50) definiert, in dem eine Mehrzahl der Batterien (9) enthalten ist; wobei die Batterien (9) innerhalb des Innenvolumens (50) eine Mehrzahl von Zwischenräumen (45) zwischen einander und dem Behälter (41, 42, 43) definieren;
wobei der Durchgang (22) mindestens einen Kanal (30) umfasst, der die erste Öffnung (20) mit dem mindestens einen Behälter (41, 42, 43) fluidverbindet;
wobei der Durchgang (22) ferner mindestens einen Hilfskanal (34, 35) umfasst;
wobei jeder Hilfskanal (34, 35) ein erstes Ende (34a, 35a) und ein zweites Ende (34b, 35b), die einander gegenüberliegenden sind, umfasst;
wobei das erste und zweite Ende (34a, 35a; 34b, 35b) beide unmittelbar dem Kanal (30) zugewandt sind;
wobei jeder Lüfter (23) an einem jeweiligen Hilfskanal (34, 35) angeordnet ist;
wobei das Verfahren **dadurch gekennzeichnet ist, dass** es den Schritt i) umfasst, den Lüfter (23) zu betreiben, wenn die Vorwärtsgeschwindigkeit (v) des Luftfahrzeugs (1) relativ zum Boden kleiner ist als ein Geschwindigkeits-Schwellenwert (v0) und/oder wenn die Temperatur (T) der Batterien (9) einen Temperatur-Schwellenwert (T0) überschreitet.

12. Verfahren nach Anspruch 11, ferner umfassend die Schritte:
ii) Erfassen der Temperatur der Batterien (9) mittels erster Sensormittel (65); wobei die ersten Sensormittel (65) funktionsmäßig mit einer Steuereinheit (60) des Luftfahrzeugs (1) verbunden sind; wobei die Steuereinheit (60) ferner funktionsmäßig mit dem mindestens einen Lüfter (23) verbunden ist; und/oder
iii) Erfassen der Vorwärtsgeschwindigkeit (v) des Luftfahrzeugs (1) mittels zweiter Sensormittel (70); wobei die zweiten Sensormittel (70) funktionsmäßig mit der Steuereinheit (60) verbunden sind.

13. Verfahren nach Anspruch 12, ferner umfassend den Schritt: iv) Ansteuern von Mitteln des Luftfahrzeugs (1) zur Variation der Durchflussrate, um die Durchflussrate, der durch die erste Öffnung (20) eintretenden Luft, durch die Steuereinheit (60) zu partitionieren, wenn die Temperatur (T) der Batterien (9) unter einen minimalen Temperatur-Schwellenwert (Tmin) fällt; wobei die Mittel zur Variation der Durchflussrate funktionsmäßig mit der Steuereinheit (60) verbunden sind; wobei der minimale Temperatur-Schwellenwert (Tmin) niedriger ist als der Temperatur-Schwellenwert (T0).

## Revendications

1. - Aéronef (1) apte à effectuer un vol stationnaire comprenant :
- un fuselage (2) allongé le long d'un axe longitudinal (Y) ;
- au moins un rotor (3a, 3b, 4) qui est rotatif autour d'un axe de rotation par rapport audit fuselage (2) ;
- des moyens d'entraînement électriques adaptés pour faire tourner ledit au moins un rotor (3a, 3b, 4) ;
- des batteries (9) adaptées pour alimenter en énergie lesdits moyens d'entraînement électriques ; et
- un système de refroidissement (10) desdites batteries (9) ;
ledit système de refroidissement (10) comprenant :
- une première ouverture (20) adaptée pour permettre à de l'air d'entrer ;
- une pluralité de secondes ouvertures (21) adaptées pour permettre à de l'air de s'échapper ;
- un passage (22), qui relie fluidiquement ladite première ouverture (20) à au moins certaines desdites secondes ouvertures (21) ;
lesdites batteries (9) étant placées au sein dudit passage (22) et interposées fluidiquement entre ladite première ouverture (20) et au moins certaines desdites secondes ouvertures (21) ;
ledit système de refroidissement (10) comprenant en outre au moins un ventilateur (23) adapté pour augmenter l'énergie cinétique de l'air contenu dans ledit passage (22) ;
ledit ventilateur (23) étant actionné, en utilisation, lorsque la vitesse d'avancement (v) dudit aéronef (1) par rapport au sol est inférieure à une valeur seuil de vitesse (v0) et/ou lorsque la température (T) desdites batteries (9) dépasse une valeur seuil de température (T0) ;
dans lequel il comprend au moins un récipient (41, 42, 43) définissant un volume intérieur (50), à l'intérieur duquel est contenue une pluralité desdites batteries (9) ; lesdites batteries (9) à l'intérieur dudit volume intérieur (50) définissant une pluralité d'interstices (45) entre elles et ledit récipient (41, 42, 43) ;
**caractérisé en ce que** ledit passage (22) comprend au moins un conduit (30), qui relie fluidiquement ladite première ouverture (20) audit au moins un récipient (41, 42, 43) ;
ledit passage (22) comprenant en outre au moins un conduit auxiliaire (34, 35) ;
chaque conduit auxiliaire (34, 35) comprenant une première extrémité (34a, 35a) et une seconde extrémité (34b, 35b) qui sont opposées l'une à l'autre ;
lesdites première et seconde extrémités (34a, 35a ; 34b, 35b) faisant toutes deux directement face audit conduit (30) ;
chaque ventilateur (23) étant agencé au niveau d'un conduit auxiliaire (34, 35) respectif.

2. - Aéronef selon la revendication 1, dans lequel il comprend deux desdits conduits auxiliaires (34, 35) agencés symétriquement l'un par rapport à l'autre par rapport à un plan médian (M) dudit aéronef (1) parallèle audit axe longitudinal (Y).

3. - Aéronef selon la revendication 1 ou 2, dans lequel il comprend :
- une unité de commande (60) reliée de manière opérationnelle audit au moins un ventilateur (23) ;
- des premiers moyens capteurs (65) adaptés pour détecter la température desdites batteries (9) et reliés de manière opérationnelle à ladite unité de commande (60) ; et/ou
- des seconds moyens capteurs (70) adaptés pour détecter la vitesse d'avancement (v) dudit aéronef (1) et reliés de manière opérationnelle à ladite unité de commande (60).

4. - Aéronef selon la revendication 3, dans lequel lesdits seconds moyens capteurs (70) comprennent un débitmètre.

5. - Aéronef selon la revendication 3 ou 4, dans lequel il comprend des moyens pour faire varier le débit d'air entrant à travers ladite première ouverture (20) reliés de manière opérationnelle à ladite unité de commande (60) ;
ladite unité de commande (60) étant programmée pour commander auxdits moyens de variation de débit de partialiser ledit débit lorsque, en utilisation, la température (T) desdites batteries (9) est inférieure à une valeur seuil de température minimale (Tmin) ;
ladite valeur seuil de température minimale (Tmin) étant inférieure à ladite valeur seuil de température (T0).

6. - Aéronef selon l'une quelconque des revendications précédentes, dans lequel il s'agit d'un avion convertible comprenant :
- ledit fuselage (2) ;
- une paire de demi-ailes (8) agencées sur des parties respectives mutuellement opposées dudit fuselage (2), et ayant des extrémités libres respectives opposées audit fuselage (2) et alignées le long d'un premier axe transversal audit axe longitudinal (Y) ; et
- au moins une première paire desdits rotors (4) qui sont rotatifs autour de deuxièmes axes (F, G) respectifs et inclinables par rapport auxdites demi-ailes (8) autour d'un troisième axe (H) transversal audit axe longitudinal (Y).

7. - Aéronef selon la revendication 6, dans lequel il comprend en outre :
- une deuxième paire desdits rotors (3a) qui sont rotatifs autour de quatrièmes axes (B, C) respectifs fixés par rapport audit fuselage (2) ; et
- une troisième paire desdits rotors (3b) qui sont rotatifs autour de cinquièmes axes (D, E) respectifs fixés par rapport audit fuselage (2) ;
ladite première paire de rotors (4) étant interposée le long dudit axe longitudinal (Y) entre ladite deuxième paire de rotors (3a) et ladite troisième paire de rotors (3b) ;
chaque rotor desdites première, deuxième ou troisième paires de rotors (4, 3a, 3b) étant opérationnel indépendamment des autres rotors desdites première, deuxième ou troisième paires de rotors (4, 3a, 3b).

8. - Aéronef selon l'une quelconque des revendications précédentes, dans lequel ledit fuselage (2) définit :
- un nez (5) dudit aéronef (1) ;
- une queue (6) dudit aéronef (1) opposée audit nez (5) le long dudit axe longitudinal (Y) ; et
- un ventre (7) interposé entre ledit nez (5) et ladite queue (6) le long dudit axe longitudinal (Y) ;
ladite première ouverture (20) étant agencée au niveau dudit nez (5) et lesdites secondes ouvertures (21) étant agencées au niveau dudit ventre (7).

9. - Aéronef selon la revendication 8, dans lequel ledit conduit (30) comprend une première section (30a) et une seconde section (30b) ;:;
ladite première section (30a) reliant fluidiquement ladite première ouverture (20) à ladite seconde section (30b) ;
ladite première ouverture (20) étant plus proche dudit ventre (7) que ladite seconde section (30b) le long d'un sixième axe (Z), qui est vertical en utilisation, dudit aéronef (1) et orthogonal à l'axe longitudinal (Y).

10. - Aéronef selon l'une quelconque des revendications précédentes, dans lequel ledit conduit (30) présente une section progressivement décroissante partant de ladite première ouverture (20) le long dudit axe longitudinal (Y).

11. - Méthode de commande d'un aéronef (1) apte à effectuer un vol stationnaire ; ledit aéronef comprenant :
- un fuselage (2) allongé le long d'un axe longitudinal (Y) ;
- au moins un rotor (3a, 3b, 4) qui est rotatif autour d'un axe de rotation par rapport audit fuselage (2) ;
- des moyens d'entraînement électriques adaptés pour faire tourner ledit au moins un rotor (3a, 3b, 4) ;
- des batteries (9) adaptées pour alimenter en énergie lesdits moyens d'entraînement électriques ; et
- un système de refroidissement (10) desdites batteries (9) ;
ledit système de refroidissement (10) comprenant :
- une première ouverture (20) adaptée pour permettre à de l'air d'entrer ;
- une pluralité de secondes ouvertures (21) adaptées pour permettre à de l'air de s'échapper ;
- un passage (22), qui place ladite première ouverture (20) en communication fluidique avec au moins certaines desdites secondes ouvertures (21) ;
lesdites batteries (9) étant placées au sein dudit passage (22) et interposées fluidiquement entre ladite première ouverture (20) et au moins certaines desdites secondes ouvertures (21) ;
ledit système de refroidissement (10) comprenant en outre au moins un ventilateur (23) adapté pour augmenter l'énergie cinétique de l'air contenu dans ledit passage (22) ;
ledit aéronef (1) comprenant en outre au moins un récipient (41, 42, 43) définissant un volume intérieur (50), à l'intérieur duquel est contenue une pluralité desdites batteries (9) ; lesdites batteries (9) à l'intérieur dudit volume intérieur (50) définissant une pluralité d'interstices (45) entre elles et ledit récipient (41, 42, 43) ;
ledit passage (22) comprenant au moins un conduit (30), qui relie fluidiquement ladite première ouverture (20) audit au moins un récipient (41, 42, 43) ;
ledit passage (22) comprend en outre au moins un conduit auxiliaire (34, 35) ;
chaque conduit auxiliaire (34, 35) comprenant une première extrémité (34a, 35a) et une seconde extrémité (34b, 35b) qui sont opposées l'une à l'autre ;
lesdites première et seconde extrémités (34a, 35a ; 34b, 35b) faisant toutes deux directement face audit conduit (30) ;
chaque ventilateur (23) étant agencé au niveau d'un conduit auxiliaire (34, 35) respectif ;
ladite méthode étant **caractérisée en ce qu'**elle comprend l'étape i) de fonctionnement dudit ventilateur (23) lorsque la vitesse d'avancement (v) dudit aéronef (1) par rapport au sol est inférieure à une valeur seuil de vitesse (v0) et/ou lorsque la température (T) desdites batteries (9) dépasse une valeur seuil de température (T0).

12. - Méthode selon la revendication 11, comprenant les étapes supplémentaires consistant en :
ii) la détection de la température desdites batteries (9) par des premiers moyens capteurs (65) ; ledits premiers moyens capteurs (65) étant reliés de manière opérationnelle à une unité de commande (60) dudit aéronef (1) ; ladite unité de commande (60) étant également reliée de manière opérationnelle audit au moins un ventilateur (23) ; et/ou
iii) la détection de la vitesse d'avancement (v) dudit aéronef (1) par des seconds moyens capteurs (70) ; lesdits seconds moyens capteurs (70) étant reliés de manière opérationnelle à ladite unité de commande (60).

13. - Méthode selon la revendication 12, comprenant l'étape supplémentaire de iv) la commande de moyens de variation de débit dudit aéronef (1) pour partialiser le débit d'air entrant à travers ladite première ouverture (20) au moyen de ladite unité de commande (60) lorsque la température (T) desdites batteries (9) est inférieure à une valeur seuil de température minimale (Tmin) ; lesdits moyens de variation de débit étant reliés de manière opérationnelle à ladite unité de commande (60) ; ladite valeur seuil de température minimale (Tmin) étant inférieure à ladite valeur seuil de température (T0).
